**Europäisches Patentamt**

**European Patent Office**

**Office européen des brevets**

(19)

(11) Publication number: **0 056 719**
**B1**

(12) # EUROPEAN PATENT SPECIFICATION

(45) Date of publication of patent specification: **20.05.87**

(51) Int. Cl.⁴: **C 03 C 27/12,** **B 32 B 17/10**

(21) Application number: **82300227.4**

(22) Date of filing: **15.01.82**

(54) **A method of producing a laminate.**

(30) Priority: **17.01.81 GB 8101462**

(43) Date of publication of application:
**28.07.82 Bulletin 82/30**

(45) Publication of the grant of the patent:
**20.05.87 Bulletin 87/21**

(84) Designated Contracting States:
**AT BE CH DE FR GB IT LI LU NL SE**

(56) References cited:
**FR-A- 761 820**
**FR-A-2 281 830**
**FR-A-2 360 527**
**GB-A- 560 000**
**GB-A-2 032 844**
**US-A- 515 368**
**US-A-1 937 396**

(73) Proprietor: **Langlands, James Wallace**
**18 Glencraig Terrace, Fenwick**
**By Kilmarnock, Ayrshire (GB)**
(84) **BE CH DE FR IT LI LU NL SE AT**

(73) Proprietor: **Ridebilt Limited**
**1 Cambuslang Road**
**Rutherglen, Glasgow (GB)**
(84) **GB**

(72) Inventor: **Langlands, James Wallace**
**18 Glencraig Terrace Fenwick**
**by Kilmarnock Ayrshire (GB)**

(74) Representative: **Pattullo, Norman et al**
**Ian G. Murgitroyd and Company Mitchell House**
**333 Bath Street**
**Glasgow G2 4ER Scotland (GB)**

Courier Press, Leamington Spa, England.

## Description

This invention relates to a method of producing a laminate.

UK Patent Number 2,032,844 describes a method of producing a laminate comprising placing a pair of sheets of frangible material in face-to-face relationship, introducing between the sheets a liquid which on solidifying forms a polymer of greater resistance to fracture than the sheets and adheres to the sheets, forming around the periphery of the sheets a continuous barrier to passage of the liquid thereby to retain the liquid between the sheets, wherein at least part of the barrier is gas-permeable, expelling air from the intersheet space through the barrier so as to cause the liquid to fill the intersheet space, and solidifying the liquid to form a bonded laminate.

In practice the barrier is usually formed by gas-permeable and liquid-impermeable adhesive tape through which air escapes to allow the liquid to fill the intersheet space. The air escapes through the tape fairly slowly, however, and this can be a disadvantage when large laminates are being produced.

FR—A—2 360 527 discloses a method of producing a laminate comprising placing a pair of glass sheets to be laminated in face-to-face relationship, introducing between the sheets a liquid synthetic material which on solidifying adheres to the sheets, forming around the periphery of the sheets a continuous barrier to passage of the liquid, the liquid being thereby retained between the sheets, provided through the barrier or seal a needle to allow air to escape through it from the intersheets space, removing the needle and solidifying the liquid. This French specification deals with the problem of removing air from between the liquid and the peripheral seal during manufacture of the laminate but it is not concerned in any way with air bubbles trapped within the body of the liquid.

According to the present invention there is provided a method of producing a laminate, comprising placing a pair of sheets to be laminated in face-to-face relationship, introducing between the sheets a liquid which on solidifying adheres to the sheets, forming around the periphery of the sheets a continuous barrier to passage of the liquid thereby to retain the liquid between the sheets, inserting a conduit through the barrier and into the liquid, disposing an open end of the conduit in or adjacent an air bubble within the liquid, applying suction to the conduit to draw the air bubble into the conduit, and solidifying the liquid.

Preferably the conduit has a bore of from 0.2 to 0.8 mm.

The conduit can additionally be used to allow rapid but controllable removal of air during filling of the intersheet space with liquid. Air can pass through the conduit until at least the majority of it has been removed, at which point the conduit can either be removed completely or blocked against further passage of air or liquid. This latter action can be performed for example by sealing the outlet end of the conduit so that air then trapped in the conduit prevents entry and passage of liquid.

Preferably removal of the conduit should not leave an aperture through which liquid can escape before solidifying; when for example the seal is resilient the aperture formed by passage of the conduit can reclose, particularly under the weight of one of the sheets.

The sheets may be of frangible material and the liquid on solidifying preferably forms a polymer having greater resistance to fracture than the sheets.

The barrier can either be gas-permeable, for example "Scotchmount" tape, or non-permeable such as rubber strip.

When the conduit is used during filling of the intersheet space, in the gas-permeable case the conduit can be withdrawn or blocked shortly prior to the liquid filling the entire intersheet space, the remaining air escaping through the barrier. If the seal is non-permeable the conduit is left in position and open until the liquid resin has filled the envelope and all the air has escaped.

The conduit may be any suitable narrow-bore instrument such as a hollow needle, and is preferably small to allow the aperture formed through the barrier to reclose on withdrawal of the conduit. It has been found that hollow needles having an inside diameter about 0.75 mm, and those having an outside diameter of 1 mm or less, are especially effective.

Air bubbles often become trapped within the liquid in the intersheet space, and these are removed by the present method by presenting the end of the conduit to the air bubble. Suction is then applied, thus drawing the air into the conduit for removal from the intersheet space. The conduit may be inserted into the air bubble or merely disposed close to it, as the suction can draw the bubble into the conduit even at a distance.

When the conduit is used during filling of the intersheet space it can be located at the area of the intersheet space most likely to retain air longest, or can be withdrawn and re-inserted several times as the liquid spreads into different areas. More than one conduit can be used simultaneously as required.

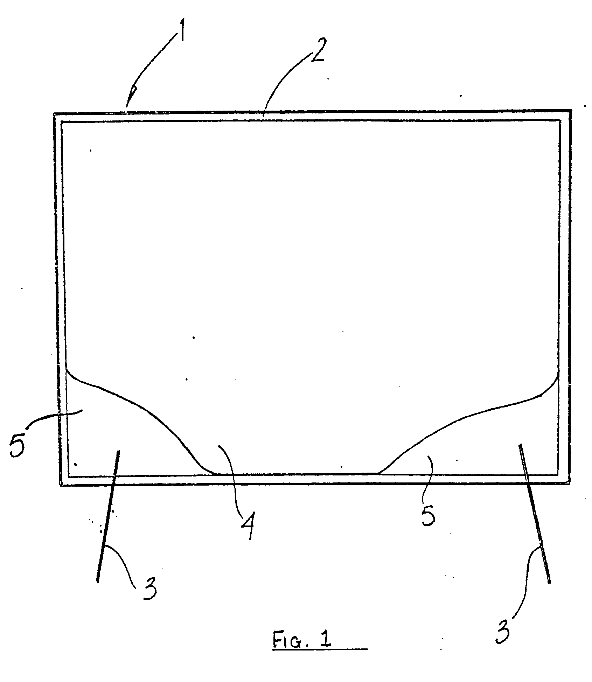

An example of a method of filling an intersheet space with resin, with the assistance of needles such as those used in the present invention, will now be described, with reference to the accompanying drawing which is a plan view of a laminate being formed.

Two rectangular sheets of glass are cleaned using a glass washing machine and gas-permeable "Scotchmount" tape is applied to all four edges of the perimeter of one of the sheets. The paper protecting the adhesive faces of the tape is removed from the bottom edge and both upright edges, and the second sheet of glass is laid in position on the first sheet so as to adhere to the tape. The two face-to-face sheets are then laid on an inclined tilting table, both sheets of glass are prised apart at their free edges and a funnel is inserted between them.

1% of silane A172 adhesion promotor is added to an amount of UVAC 2721 (Warwick Chemicals) resin calculated as correct for filling the intersheet volume. 1% of methyl ethyl Ketone peroxide catalyst is then added to the resin/silane mixture with gentle but thorough mixing and the mixture is allowed to stand until all air bubbles have escaped. The mixture is then poured slowly between the sheets through the funnel.

When the mixture has settled in the lower part of the cavity the funnel is removed and a wedge inserted to keep the sheets apart. The protective paper is then removed from the tape at the top edge of the sheets and the table lowered until horizontal; at the same time the space at the top is decreased. A pair of hollow needles having a bore of 0.6 mm are inserted through the tape, which at this time seals all round the sheets forming a closed but air-permeable envelope, as shown in the drawing in which the upper sheet is 1, the tape is 2, the needles are 3 and the liquid resin is 4. The resin spreads across the envelope forcing the air in pockets 5 to escape through the needles 3. When the resin has approached close to the needles 3 ends within the envelope the needles 3 are withdrawn, and the weight of the sheet 1 causes the tape 2 to close the aperture formed on insertion of the needles 3. The remaining air in the pockets 5 permeates through the tape 2 until the entire intersheet space is filled with the resin 4. The resin is then allowed to cure and a bonded laminate is obtained.

During filling of the intersheet space with resin, the needles 3 can if desired by connected to, for example, an air pump which runs continuously, and in this way rapid production of laminates can be made by positive suction of the air from many envelopes in succession or simultaneously.

## Claims

1. A method of producing a laminate, comprising placing a pair of sheets to be laminated in face-to-face relationship, introducing between the sheets a liquid which on solidifying adheres to the sheets, forming around the periphery of the sheets a continuous barrier to passage of the liquid thereby to retain the liquid between the sheets, inserting a conduit through the barrier and into the liquid, disposing an open end of the conduit in or adjacent an air bubble within the liquid, applying suction to the conduit to draw the air bubble into the conduit, and solidifying the liquid.

2. A method according to Claim 1, wherein the conduit has a bore of from 0.2 to 0.8 mm.

3. A method according to Claim 1 or 2, wherein the conduit has an outside diameter of 1 mm or less.

4. A method according to any one of the preceding Claims, wherein the conduit is removed from the intersheet space prior to the liquid being solidified.

5. A method according to Claim 4, wherein at least the part of the barrier through which the conduit passes is closable on removal of the conduit.

6. A method according to any one of the preceding Claims, wherein at least the part of the barrier through which the conduit passes is resilient.

7. A method according to any one of the preceding Claims, wherein at least part of the barrier is gas-permeable but liquid-impermeable.

## Patentansprüche

1. Verfahren zum Herstellen eines Laminats, bei dem man ein Paar zu verbindender Schichten Fläche an Fläche zueinander plaziert, zwischen die Schichten eine Flüssigkeit einführt, die nach dem Verfestigen an den Schichten anhaftet, um den Umfang der Schichten herum eine durchgehende Flüssigkeitsbarriere bildet, wodurch die Flüssigkeit zwischen den Schichten eingeschlossen wird, eine Leitung durch die Barriere hindurch in die Flüssigkeit einführt, ein offenes Ende der Leitung innerhalb oder in der Nähe einer Luftblase in der Flüssigkeit anordnet, die Leitung einer Saugkraft aussetzt, um die Luftblase in die Leitung zu ziehen, und die Flüssigkeit verfestigt.

2. Verfahren nach Anspruch 1, bei dem die Leitung eine Bohrung von 0,2 bis 0,8 mm aufweist.

3. Verfahren nach Anspruch 1 oder 2, bei dem die Leitung einen Außendurchmesser von 1 mm oder weniger aufweist.

4. Verfahren nach einem der vorhergehenden Ansprüche, bei dem die Leitung aus dem Raum zwischen den Schichten entfernt wird, bevor die Flüssigkeit verfestigt wird.

5. Verfahren nach Anspruch 4, bei dem wenigstens der Teil der Barriere, durch den die Leitung führt, beim Entfernen der Leitung verschließbar ist.

6. Verfahren nach einem der vorhergehenden Ansprüche, bei dem wenigstens der Teil der Barriere, durch den die Leitung führt, nachgiebig ist.

7. Verfahren nach einem der vorhergehenden Ansprüche, bei dem wenigstens ein Teil der Barriere gasdurchlässig, aber flüssigkeitsundurchlässig ist.

## Revendications

1. Procédé de fabrication d'un laminé, caractérisé en ce qu'il consiste: à disposer face à face deux feuillets à laminer; à introduire entre les feuillets un liquide qui adhère aux feuillets en se solidifiant; à former le long de la périphérie des feuillets une barrière continue au passage du liquide afin de retenir celui-ci entre les feuillets; à insérer un conduit à travers la barrière et dans le liquide; à disposer une extrémité ouverte du conduit dans ou près d'une bulle d'air à l'intérieur du liquide; à exercer une aspiration dans le conduit pour tirer la bulle d'air dans le conduit; et à solidifier le liquide.

2. Procédé suivant la revendication 1, caractérisé en ce que le conduit a un alésage compris entre 0,2 et 0,8 mm.

3. Procédé suivant la revendication 1 ou la revendication 2, caractérisé en ce que le conduit a un diamètre extérieur de 1 mm ou moins.

4. Procédé suivant l'une quelconque des revendications précédentes caractérisé en ce qu'on retire le conduit de l'espace entre les feuillets avant solidification du liquide.

5. Procédé suivant la revendication 4, caractérisé en ce qu'au moins la partie de la barrière que traverse le conduit peut-être fermée lors du retrait du conduit.

6. Procédé suivant l'une quelconque des revendications précédentes, caractérisé en ce qu'au moins la partie de la barrière que traverse le conduit est élastique.

7. Procédé suivant l'une quelconque des revendications précédentes caractérisé en ce qu'au moins une partie de la barrière est perméable aux gaz mais imperméable aux liquides.

FIG. 1